# EUROPÄISCHE PATENTSCHRIFT

(11) **EP 2 633 968 B1**
(45) Veröffentlichungstag und Bekanntmachung des Hinweises auf die Patenterteilung: **04.01.2017**
(21) Anmeldenummer: 13157109.3
(22) Anmeldetag: 28.02.2013
(51) Int. Cl.: B29C 45/00, B65F 1/00, B29C 45/27

(54) **Verfahren zum Herstellen eines Kunststoffbehälters und Kunststoffbehälter**
Method for producing a plastic container and plastic container
Procédé de fabrication d'un récipient en plastique et récipient en plastique

(30) Priorität: 01.03.2012 DE 102012101699
(43) Veröffentlichungstag der Anmeldung: 04.09.2013
(73) Patentinhaber: ESE World B.V., 6199 AC Maastricht-Airport (NL)
(72) Erfinder: Fröhlingsdorf, Udo, 57462 Olpe/Biggesee (DE)
(74) Vertreter: Müller, Thomas

(56) Entgegenhaltungen:
- EP-A1- 0 609 942
- FR-A1- 2 789 343
- US-A- 3 568 973
- US-A- 3 977 821
- US-A- 4 078 037

## Beschreibung

Die vorliegende Erfindung betrifft zunächst ein Verfahren zum Herstellen eines Kunststoffbehälters gemäß den Oberbegriffen von Patentanspruch 1 und 5. Weiterhin betrifft die Erfindung auch einen Kunststoffbehälter.

Kunststoffbehälter der genannten Art weisen insbesondere einen Behälterkorpus auf, der wiederum einen Behälterboden und eine Behälterwandung aufweist, wobei die Behälterwandung die Seitenwand des Behälters bildet. Je nach geometrischer Ausgestaltung des Behälters kann die Behälterwandung aus einem oder mehreren Behälterwandsegmenten bestehen. Ist nur ein Behälterwandsegment vorhanden, weist der Behälter beziehungsweise der Behälterkorpus beispielsweise eine runde, ovale oder elliptische Kontur auf. Weist der Behälter zwei oder mehr Behälterwandsegmente auf, grenzen diese in der Regel aneinander; wobei im Bereich der Angrenzung jeweils eine Behälterkante ausgebildet ist. Auch wenn mehrere Behälterwandsegmente mit dazwischen liegenden Behälterkanten vorgesehen sind, kann der Kunststoffbehälter bevorzugt einstückig hergestellt werden.

Dies kann beispielsweise mittels geeigneter Spritzverfahren, etwa dem Spritzgussverfahren, realisiert werden. Dabei werden die einzelnen Bestandteile des Behälters in geeigneter Weise angespritzt.

Üblicherweise werden Kunststoffbehälter hergestellt, indem diese über einen Anspritzpunkt zentral - vom Boden des Behälters - gefüllt werden. Bei der Reduzierung von Wandstärken erhöht sich aber der Druckbedarf im Spritzgießwerkzeug. Somit wird der eingespritzte Kunststoff stärker belastet bis eventuell geschädigt.

Um den Druckbedarf zu reduzieren, müssen die Fließweglängen verkürzt werden. Dies kann durch eine Mehrfachanspritzung an geeigneten Stellen erreicht werden.

Eine derartige Lösung ist beispielsweise in der FR 2 789 343 B beschrieben. Bei dieser bekannten Lösung wird ein Kunststoffbehälter der eingangs genannten Art mittels eines Spritzgussverfahrens hergestellt, wobei die Anspritzung jeweils auf den Seitenflächen, das heißt auf den Flächen der Behälterwandsegmente, und auf der Fläche des Behälterbodens erfolgt. Die Anspritzung erfolgt dabei jeweils flächenmittig. Diese bekannte Lösung weist jedoch eine Reihe von Nachteilen auf. Insbesondere besteht die Gefahr von Einfall oder Verwerfungen im Bereich der Anspritzpunkte auf den Flächen, da es sich im Bereich der Anspritzpunkte um so genannte Hot-Spot-Bereiche handelt, verursacht durch das Einspritzen des heißen Materials und der Konstruktions-bedingten Materialanhäufung im Übergang Anguss zu Behälterwand. Diese Unebenheiten auf den Seitenwänden behindern die nachträgliche Anbringung von Aufklebern oder die Bedruckung der Bereiche. Auch "In Mould Labels" sind nur sehr unzureichend zu realisieren. Das optische Erscheinungsbild ist minderwertig.

In der US 4,078,037 wird ein Container aus einem kreuzförmigen Rohling hergestellt, wobei der Rohling aus plattenförmigen Seitenwänden besteht. Der Rohling wird in das Werkzeug einer Spritzgussvorrichtung eingelegt, welches die Form des fertigen Containers definiert. Am Fuß der Werkzeugkanten wird nun Material eingespritzt, wodurch eine Kantennaht entsteht, welche die Seitenwände des Rohlings verbindet.

Die US 3,568,973 beschreibt die Herstellung eines Plastikcontainers durch ein Spritzgießverfahren, wobei der Plastikcontainer einen Boden, Seitenwände und Zwischenwände aufweist, Zwischen Boden und Seitenwänden befindet sich eine Fuge. Eine andere Lösung dieser Art ist in der US 3,977,821 offenbart.

In der EP 0 609 942 A1 wird in anderem Zusammenhang ein Spritzgussverfahren beschrieben, bei dem die Anspritzung über verschiedene Anspritzpunkte oder aber über Anspritzstege erfolgt.

Ausgehend vom genannten Stand der Technik liegt der vorliegenden Erfindung die Aufgabe zugrunde, ein Verfahren der eingangs genannten Art derart weiterzubilden, dass die zuvor genannten Nachteile umgangen werden können, indem Anspritzpunkte auf den Seitenflächen des Kunststoffbehälters vermieden werden können. Weiterhin soll auch ein entsprechend verbesserter Kunststoffbehälter bereitgestellt werden.

Diese Aufgabe wird erfindungsgemäß gelöst durch das Verfahren zum Herstellen eines Kunststoffbehälters mit den Merkmalen gemäß dem unabhängigen Patentanspruch 1, das Verfahren zum Herstellen eines Kunststoffbehälters mit den Merkmalen gemäß dem unabhängigen Patentanspruch 5 sowie dem Kunststoffbehälter mit den Merkmalen gemäß dem unabhängigen Patentanspruch 13. Weitere Merkmale und Details der Erfindung ergeben sich aus den Unteransprüchen, der Beschreibung sowie der Zeichnung. Dabei gelten Merkmale und Details, die im Zusammenhang mit einem der Erfindungsaspekte beschrieben sind, vollumfänglich auch im Zusammenhang mit den jeweils anderen Erfindungsaspekten. Insbesondere gelten Merkmale und Details, die im Zusammenhang mit den erfindungsgemäßen Verfahren beschrieben sind, vollumfänglich auch im Zusammenhang mit dem erfindungsgemäßen Kunststoffbehälter, und umgekehrt, so dass hinsichtlich der Offenbarung der einzelnen Erfindungsaspekte wechselseitig vollinhaltlich Bezug genommen und verwiesen wird.

Der erfinderische Grundgedanke der vorliegenden Erfindung besteht nunmehr darin, dass nicht mehr mittig oder zentral auf den Seitenflächen des Kunststoffbehälters angespritzt wird, sondern vielmehr auf den Kanten des Kunststoffbehälters beziehungsweise im Bereich der Kanten des Kunststoffbehälters.

Gemäß dem ersten Aspekt der Erfindung wird ein Verfahren zum Herstellen eines Kunststoffbehälters, insbesondere eines Müllbehälters, bereitgestellt, wobei der Kunststoffbehälter einen Behälterboden und eine Behälterseitenwand mit wenigstens zwei Behälterseitenwandsegmenten aufweist, wobei die Behälterwandsegmente aneinander angrenzen und im Bereich der Angrenzung jeweils eine Behälterkante bilden, die sich stets zwischen zwei aneinander angrenzenden Behälterwandsegmenten befindet, und wobei der Behälter mittels eines Spritzgussverfahrens hergestellt wird, indem die einzelnen Bestandteile des Behälters angespritzt werden. Das Verfahren ist erfindungsgemäß dadurch gekennzeichnet, dass die Anspritzung auf wenigstens einer der Behälterkanten des Kunststoffbehälters über wenigstens einen Anspritzpunkt erfolgt.

Gemäß einem zweiten Aspekt der Erfindung wird ein Verfahren zum Herstellen eines Kunststoffbehälters, insbesondere eines Müllbehälters, bereitgestellt, wobei der Kunststoffbehälter einen Behälterboden und eine Behälterseitenwand mit wenigstens zwei Behälterseitenwandsegmenten aufweist, welche aneinander angrenzen und im Bereich der Angrenzung jeweils eine gerundete Behälterkante bilden, die sich stets zwischen zwei aneinander angrenzenden Behälterwandsegmenten befindet, und wobei der Kunststoffbehälter mittels eines Spritzgussverfahrens hergestellt wird, indem die einzelnen Bestandteile des Behälters angespritzt werden. Das Verfahren ist erfindungsgemäß dadurch gekennzeichnet, dass die Anspritzung auf wenigstens einem Behälterseitenwandsegment des Kunststoffbehälters über wenigstens einen Anspritzpunkt im Beginn des Radiusauslaufs des Eckradius wenigstens einer der gerundeten Behälterkanten erfolgt.

Gemäß einem dritten Aspekt der vorliegenden Erfindung wird ein Verfahren zum Herstellen eines Kunststoffbehälters, insbesondere eines Müllbehälters, bereitgestellt, welches eine Kombination der beiden zuvor beschriebenen Verfahren darstellt, wobei die Anspritzung auf wenigstens einer Behälterkante des Kunststoffbehälters und auf wenigstens einem Behälterseitenwandsegment des Kunststoffbehälters im Bereich wenigstens einer Behälterkante erfolgt.

Die erfindungsgemäßen Verfahren sind zur Herstellung eines Kunststoffbehälters ausgelegt. Dabei ist die Erfindung nicht auf bestimmte Typen von Kunststoffbehältern beschränkt. Beispielsweise kann mittels der erfindungsgemäßen Verfahren ein Müllbehälter hergestellt werden.

Auch ist die Erfindung nicht auf bestimmte Geometrien und Konturen des herzustellenden Kunststoffbehälters beschränkt. Grundsätzlich weist ein derartiger Kunststoffbehälter eine Behälterwandung auf, wobei die Behälterwandung die Seitenwand des Behälters bildet, welche den Behälter zu den Seiten hin begrenzt. Weiterhin weist ein derartiger Kunststoffbehälter einen Behälterboden auf, der von der Behälterseitenwand zu unterscheiden ist, und welcher den Kunststoffbehälter nach unten hin begrenzt. Der Behälterboden und die Behälterseitenwand bilden den Behälterkorpus. Je nach geometrischer Ausgestaltung des Behälters kann die Behälterseitenwand aus zwei oder mehreren Behälterseitenwandsegmenten bestehen, welche aneinander angrenzen. Im Bereich der Angrenzung ist dann jeweils eine Behälterkante vorgesehen oder ausgebildet, oder aber die Angrenzung selbst ist als Behälterkante ausgebildet. Eine Behälterkante im Sinne der vorliegenden Patentanmeldung befindet sich somit stets zwischen zwei aneinander angrenzenden Behälterseitenwandsegmenten. Insbesondere handelt es sich bei solchen Behälterkanten um gerundete Behälterkanten.

Bevorzugte Ausführungsformen für die Ausgestaltung derartiger Kunststoffbehälter werden im weiteren Verlauf der Beschreibung in größerem Detail erläutert. Auch wenn mehrere Behälterseitenwandsegmente mit dazwischen liegenden Behälterkanten vorgesehen sind, kann der Kunststoffbehälter bevorzugt einstückig hergestellt werden beziehungsweise ausgebildet sein.

Auch ist die Erfindung nicht auf bestimmte Kunststoffmaterialien beschränkt. Bevorzugt ist, dass sich die Kunststoffmaterialien mittels eines Spritzgussverfahrens, beispielsweise eines Spritzgießverfahrens verarbeiten lassen. Bevorzugt ist ferner, wenn die Kunststoffmaterialien eine ausreichende Festigkeit, Härte und Elastizität aufweisen, so dass damit beispielsweise Müllbehälter hergestellt werden können.

Die Herstellung des Kunststoffbehälters erfolgt mittels eines Spritzverfahrens, beispielsweise eines Spritzgussverfahrens. Dabei ist die Erfindung grundsätzlich nicht auf bestimmte Spritzverfahren beschränkt. Bevorzugte Ausführungsformen für geeignete Spritzverfahren werden im weiteren Verlauf in größerem Detail beschrieben. Das Spritzverfahren zeichnet sich grundsätzlich dadurch aus, dass die einzelnen Bestandteile des Kunststoffbehälters angespritzt werden. Bei diesen Bestandteilen des Behälters handelt es sich insbesondere um den Behälterboden und die Behälterseitenwand, die aus wenigstens zwei Behälterseitenwandsegmenten besteht. Die einzelnen Bestandteile des Behälters werden mittels des Spritzverfahrens angespritzt. Das bedeutet insbesondere, dass das Material in ein Werkzeug, beispielsweise in eine Kavität eines Werkzeugs, welche die Kontur oder zumindest annähernd die Kontur des herzustellenden Kunststoffbehälters aufweist, eingespritzt wird. wodurch die einzelnen Bestandteile des Kunststoffbehälters entstehen. Ein bevorzugtes Beispiel, wie dies geschehen kann, wird weiter unten in größerem Detail beschrieben.

Erfindungsgemäß ist gemäß dem ersten Aspekt der Erfindung nunmehr vorgesehen, dass die Anspritzung auf wenigstens einer Behälterkante, beispielsweise einer gerundeten Behälterkante, des Kunststoffbehälters erfolgt. Das bedeutet insbesondere, dass die Anspritzung an der Behälterkante oder aber im Bereich der Behälterkante erfolgt. Dabei ist die Erfindung nicht auf eine bestimmte Anzahl von Behälterkanten beschränkt, auf denen die Anspritzung erfolgt. Die geeignete Anzahl der Behälterkanten ergibt sich insbesondere aus der Kontur und Größe des herzustellenden Kunststoffbehälters. Bevorzugte Ausführungen hierzu werden im weiteren Verlauf der Beschreibung in größerem Detail erläutert.

Erfindungsgemäß ist gemäß dem zweiten Aspekt der Erfindung nunmehr vorgesehen, dass die Anspritzung auf wenigstens einem Behälterseitenwandsegment des Kunststoffbehälters im Bereich wenigstens einer Behälterkante erfolgt. Bei dieser Variante erfolgt die Anspritzung nicht mehr auf den Behälterkanten selbst, sondern beabstandet, das heißt in einem Abstand zu den Behälterkanten. Allerdings bedeutet die Anspritzung im Bereich der Behälterkante auch, dass die Anspritzung in der Näher der Behälterkante, insbesondere in räumlicher Nähe, insbesondere in unmittelbarer Nähe zur Behälterkante erfolgt.

Dabei ist bevorzugt vorgesehen, dass die Anspritzung auf dem Behälterseitenwandsegment in einem Abstand zur Behälterkante erfolgt, welcher kleiner, insbesondere um ein Vielfaches kleiner ist als der Abstand der Anspritzung auf dem Behälterseitenwandsegment zur Mitte des Behälterseitenwandsegments. Das Behälterseitenwandsegment weist bevorzugt eine definierte Breite auf. Bevorzugt ist vorgesehen, dass die Anspritzung in einem bestimmten Abstand von der Behälterkante erfolgt, wobei dieser Abstand kleiner ist als ein Drittel der Breite des Behälterwandsegments, bevorzugt kleiner als ein Viertel der Breite des Behälterseitenwandsegments, bevorzugt kleiner als ein Fünftel der Breite des Behälterwandsegments, bevorzugt kleiner als ein Sechstel der Breite des Behälterseitenwandsegments. Wenn es sich bei der Behälterkante um eine gerundete Kante handelt, erfolgt die Anspritzung erfindungsgemäß in einem solchen Abstand zur Behälterkante, der im Bereich des Radiusauslaufs des Eckradius der Behälterkante liegt. Erfindungsgemäß liegt die Anspritzung in einem solchen Fall im Beginn des Radiusauslaufs des Eckradius.

Erfindungsgemäß ist gemäß dem dritten Aspekt der Erfindung nunmehr vorgesehen, dass die Anspritzung auf wenigstens einer Behälterkante des Kunststoffbehälters, und auf wenigstens einem Behälterseitenwandsegment des Kunststoffbehälters im Bereich wenigstens einer Behälterkante erfolgt.

Eine solche Ausgestaltung des Verfahrens gemäß den drei vorgenannten Erfindungsaspekten weist eine Reihe von Vorteilen auf. Ein Vorteil bei der Anspritzung auf den Behälterkanten und/oder im Bereich der Behälterkanten, das heißt in Eckpositionen, besteht darin, dass im Gegensatz zur mittigen Anspritzung auf den Flächen, wie dies aus dem Stand der Technik bekannt ist, keine Gefahr von Einfall, Einziehungen oder Einschnürungen durch so genannte Hot Spot Bereiche der Fläche im Anspritzbereich mehr gegeben ist, da die Ecken wesentlich stabiler stehen. Auch werden Beschriftungen und Label, beispielsweise Aufkleber, nicht mehr behindert. Zudem fallen die Anspritzpunkte in den Ecken weniger auf.

Bevorzugt ist das Verfahren zur Herstellung eines Kunststoffbehälters ausgebildet, welcher einen Behälterboden und eine Behälterseitenwand mit vier Behälterseitenwandsegmenten aufweist. Die vier Behälterseitenwandsegmente grenzen aneinander an und bilden im Bereich der Angrenzungen insgesamt vier Behälterkanten, beispielsweise gerundete Behälterkanten. Dadurch kann insbesondere ein Kunststoffbehälter mit viereckiger Kontur hergestellt werden. In einem solchen Fall erfolgt die Anspritzung auf wenigstens zwei, vorzugsweise auf vier Behälterkanten und/oder Behälterseitenwandsegmenten des Kunststoffbehälters.

Erfindungsgemäß erfolgt die Anspritzung auf der wenigstens einen Behälterkante des Kunststoffbehälters und/oder auf wenigstens einem Behälterseitenwandsegment des Kunststoffbehälters im Bereich einer Behälterkante über wenigstens einen Anspritzpunkt. Alternativ oder zusätzlich kann vorgesehen sein, dass die Anspritzung auf wenigstens einer Behälterkante des Kunststoffbehälters und/oder auf wenigstens einem Behälterseitenwandsegment des Kunststoffbehälters im Bereich einer Behälterkante über wenigstens zwei Anspritzpunkte erfolgt. Der Anspritzpunkt ist insbesondere die Stelle, an der das Material in ein Werkzeug, beispielsweise in eine Kavität eines Werkzeugs gespritzt wird.

Bevorzugt kann weiterhin vorgesehen sein, dass die Anspritzung zusätzlich auf der Fläche des Behälterbodens, insbesondere mittig auf der Fläche des Behälterbodens, erfolgt.

Mit den erfindungsgemäßen Verfahren lassen sich unterschiedliche Anspritzszenarien realisieren. Beispielsweise kann eine untere mittige Anspritzung zusammen mit einer Vier-Eck-Anspritzung realisiert werden. In diesem Fall werden insbesondere Kunststoffbehälter realisiert, die einen Behälterboden und eine aus vier Behälterseitenwandsegmenten bestehende Behälterwandung aufweisen, wobei die Behälterseitenwandsegmente aneinander angrenzen und so insgesamt vier Behälterkanten bilden.

In diesem Fall erfolgt die Anspritzung über die Fläche des Behälterbodens und hier insbesondere über zumindest einen Anspritzpunkt. Erfolgt die Anspritzung über einen einzigen Anspritzpunkt, wird dies insbesondere mittig realisiert. Zudem erfolgt die Anspitzung über vier Behälterkanten des Kunststoffbehälters und/oder über vier Behälterseitenwandsegmente des Kunststoffbehälters im Bereich einer Behälterkante. In diesem Fall erfolgt die Anspritzung auf jeder der vier Behälterkanten und/oder auf jedem der vier Behälterseitenwandsegmente im Bereich einer Behälterkante über jeweils einen Anspritzpunkt. In anderer Ausgestaltung ist möglich, auf die Anspritzung über die Fläche des Behälterbodens zu verzichten. In anderer Ausgestaltung sind auch Verfahrensvarianten denkbar, in denen eine eins plus acht Anspritzung erfolgt. In diesem Fall erfolgt wiederum eine Anspritzung über die Fläche des Behälterbodens, während die Anspritzung auf jeder der vier Behälterkanten und/oder auf jedem der vier Behälterseitenwandsegmente im Bereich einer Behälterkante über jeweils zwei Anspritzpunkte erfolgt. In anderer Ausgestaltung ist möglich, auf die Anspritzung über die Fläche des Behälterbodens zu verzichten.

Bevorzugt kann der Kunststoffbehälter mittels eines Spritzgussverfahrens, insbesondere mittels eines sequentiellen Spritzgussverfahrens, hergestellt werden.

Das Spritzgussverfahren, beziehungsweise die Spritzgussvorrichtung, und hier insbesondere das Angusssystem kann vorzugsweise über Kaskadensteuerung realisiert werden. Dabei wird insbesondere zuerst über die, insbesondere mittige, untere Anspritzdüse der Kunststoff in das Werkzeug einspritzt. Sobald die Schmelze über die ersten 4 Eckanspritzpunkte geflossen ist, werden diese ebenfalls zugeschaltet und das Werkzeug komplett gefüllt. Entsprechendes gilt für die eins plus acht Anspritzdüsen.

Generell wird bei einem Spritzgussverfahren in einer Spritzgießvorrichtung der zu verarbeitende Werkstoff, im vorliegenden Fall ein Kunststoff zunächst plastifiziert. Das bedeutet, dass der Kunststoff in einen thermoplastischen Zustand überführt wird. Anschließend wird das plastifizierte Kunststoffmaterial dosiert und dann in ein Werkzeug der Spritzgießvorrichtung gespritzt. Dies erfolgt über so genannte Angussbuchsen, die in das Werkzeug, insbesondere in dessen Kavität, einmünden. Das Werkzeug verfügt über eine Kavität, die die Form und die Oberflächenstruktur des herzustellenden Kunststoffbehälters bestimmt. Dort wo das Material die Angussbuchsen verlässt und in das Werkzeug eingespritzt wird, befinden sich die Anspritzpunkte. Diese Anspritzpunkte lassen sich nach Fertigstellung des Kunststoffbehälters auf dessen Oberfläche erkennen. Da auf der Oberfläche des fertig gestellten Kunststoffbehälters befindliche Anspritzpunke, wie weiter oben beschrieben, nachteilig sind, wird es gemäß der vorliegenden Erfindung nunmehr möglich, die Anspritzpunkte auf die Behälterkanten, oder aber in den Bereich der Behälterkanten, zu verlegen. Nach Beendigung des eigentlichen Spritzvorgangs wird ein Kühlvorgang durchgeführt, das Werkzeug anschließend geöffnet und der fertig gestellte Kunststoffbehälter entformt. Nun kann ein weiterer Formvorgang durchgeführt werden.

In bevorzugter Ausgestaltung ist vorgesehen, dass der Kunststoffbehälter in einer Spritzgießvorrichtung hergestellt wird, welche ein Werkzeug mit der Kontur des herzustellenden Kunststoffbehälters aufweist, wobei das Werkzeug insbesondere eine entsprechend ausgebildete Kavität mit der Kontur des herzustellenden Kunststoffbehälters aufweist. Das Werkzeug verfügt weiterhin über wenigstens eine Angussbuchse zum Einspritzen von Kunststoffmaterial in das Werkzeug. Bei der Angussbuchse kann es sich um eine Anspritzdüse, oder aber zum einen Bestandteil einer Anspritzdüse handeln. Die wenigstens eine Angussbuchse mündet im Bereich wenigstens einer Behälterkante des herzustellenden Kunststoffbehälters und/oder im Bereich wenigstens eines Behälterseitenwandsegments im Bereich wenigstens einer Behälterkante des herzustellenden Kunststoffbehälters in das Werkzeug ein, wobei die Anspritzung über die wenigstens eine Angießbuchse an wenigstens einer Behälterkante des Kunststoffbehälters und/oder im Bereich wenigstens einer Behälterkante des Kunststoffbehälters erfolgt. Die Spritzgießvorrichtung kann insbesondere zur Durchführung des oben genannten Kaskadengießens ausgebildet sein.

Bevorzugt ist weiterhin, dass die Anspritzung auf wenigstens einer Innenseite der Behälterkante des Kunststoffbehälters und/oder des Behälterseitenwandsegments des Kunststoffbehälters, und/oder auf wenigstens einer Außenseite der Behälterkante des Kunststoffbehälters und/oder des Behälterseitenwandsegments des Kunststoffbehälters erfolgt. Erfolgt die Anspritzung auf der Innenseite, lassen sich von außen beim fertig gestellten Kunststoffbehälter keine Anspritzpunkte mehr ausmachen. Erfolgt die Anspritzung auf der Außenseite, lässt sich das Verfahren in der Regel konstruktiv einfacher und damit weniger aufwändig durchführen.

Gemäß einem vierten Aspekt wird ein Kunststoffbehälter bereitgestellt, aufweisend einen Behälterboden und eine Behälterseitenwand mit wenigstens zwei Behälterseitenwandsegmenten, welche aneinander angrenzen und im Bereich der Angrenzung jeweils eine Behälterkante bilden. Der Kunststoffbehälter ist dadurch gekennzeichnet, dass dieser durch ein wie vorstehend beschriebenes erfindungsgemäßes Verfahren herstellbar ist oder hergestellt ist. Zur Ausgestaltung des erfindungsgemäßen Kunststoffbehälters wird deshalb vollinhaltlich auf die vorstehenden Ausführungen zum erfindungsgemäßen Verfahren Bezug genommen und verwiesen.

Gemäß einem weiteren Aspekt der vorliegenden Erfindung wird ein Kunststoffbehälter bereitgestellt, aufweisend einen Behälterboden und eine Behälterseitenwand mit wenigstens zwei Behälterseitenwandsegmenten, wobei die Behälterwandsegmente aneinander angrenzen und im Bereich der Angrenzung jeweils eine Behälterkante bilden, die sich stets zwischen zwei aneinander angrenzenden Behälterwandsegmenten befindet. Der Kunststoffbehälter ist dadurch gekennzeichnet, dass dieser an wenigstens einer Behälterkante wenigstens einen Anspritzpunkt aufweist und/oder dass die Behälterkante als gerundete behälterkante ausgebildet ist, und dass der Kunststoffbehälter im Beginn des Radiusauslaufs des Eckradius der gerundeten Behälterkante wenigstens einen Anspritzpunkt aufweist.

In weiterer Ausgestaltung kann der Kunststoffbehälter an der Fläche des Behälterbodens, insbesondere mittig, wenigstens einen Anspritzpunkt aufweisen.

Ein wie vorstehend beschriebener Kunststoffbehälter ist in verschiedenen Ausführungsformen im Zusammenhang mit den erfindungsgemäßen Verfahren beschrieben, so dass hinsichtlich der Ausgestaltung des Kunststoffbehälters vollumfänglich auf die Ausführungen zu den erfindungsgemäßen Verfahren Bezug genommen und verwiesen wird.

Insbesondere kann auch vorgesehen sein, dass der Kunststoffbehälter an wenigstens einer Behälterkante und/oder auf wenigstens einem Behälterseitenwandsegment im Bereich einer Behälterkante wenigstens zwei Anspritzpunkte aufweist.

Bevorzugt kann der Kunststoffbehälter als Müllbehälter ausgebildet sein. Der Kunststoffbehälter kann beispielsweise einen Behälterboden und eine Behälterseitenwand aufweisen, wobei der Behälterboden und die Behälterseitenwand den Behälterkorpus bilden. Die Behälterseitenwand besteht bevorzugt aus wenigstens zwei, vorzugsweise vier Behälterseitenwandsegmente, die jeweils aneinander angrenzen und im Bereich ihrer Angrenzung jeweils eine, insbesondere gerundete, Behälterkante bilden. Bei vier Behälterseitenwandsegmenten weist der Kunststoffbehälter folglich vier Behälterkanten auf. Da der Kunststoffbehälter durch ein Spritzverfahren hergestellt wird, weist er dennoch bevorzugt eine einstückige Form auf. Auf jeder der Behälterkanten und/oder auf jedem Behälterseitenwandsegment im Bereich einer Behälterkante kann bevorzugt ein Anspritzpunkt vorgesehen sein. Der Anspritzpunkt markiert dabei die Stelle, an der das Material zur Herstellung des Kunststoffbehälters in das Werkzeug, beispielsweise in dessen Kavität, eingespritzt wurde.

Die Erfindung wird nun anhand von Ausführungsbeispielen unter Bezugnahme auf die beiliegenden Zeichnungen näher erläutert. Es zeigen
- Figur 1: in schematischer Darstellung die erfindungsgemäße Herstellung eines erfindungsgemäßen Kunststoffbehälters gemäß einer ersten Ausführungsform; und
- Figur 2: in schematischer Darstellung die erfindungsgemäße Herstellung eines erfindungsgemäßen Kunststoffbehälters gemäß einer zweiten Ausführungsform.

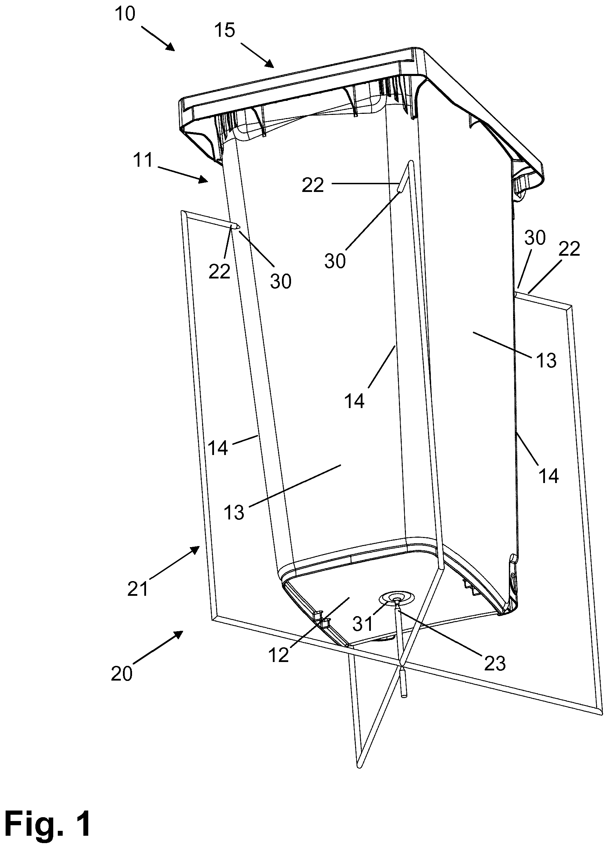

In Figur 1 ist dargestellt, wie ein als Müllbehälter ausgebildeter Kunststoffbehälter 10 mittels eines Spritzgießverfahrens hergestellt wird. Der Kunststoffbehälter 10 soll nach seiner Fertigstellung einen Behälterkorpus 11 aufweisen, mit einem Behälterboden 12 und einer Behälterseitenwand, die aus vier Behälterseitenwandsegmenten 13 besteht. Die Behälterseitenwandsegmente 13 grenzen an ihren Kanten aneinander an und bilden im Bereich der Angrenzung jeweils vier Behälterkanten 14. Der viereckige Behälterkorpus 11 weist an seinem oberen Ende eine Einwurföffnung 15 auf, in die später Müll eingefüllt werden kann.

Die Herstellung des Kunststoffbehälters 10 erfolgt über ein Spritzgussverfahren mittels einer Spritzgießvorrichtung 20. Die Spritzgießvorrichtung 20 weist unter anderem ein Werkzeug 21 auf, das in der Figur lediglich ganz schematisiert dargestellt ist. Das Werkzeug 21 wiederum verfügt über eine Kavität, die der Kontur des herzustellenden Kunststoffbehälters 10 entspricht. Dazu verfügt das Werkzeug über entsprechende Angussbuchsen 22.

Zunächst wird der Kunststoff in einen thermoplastischen Zustand überführt. Anschließend wird das plastifizierte Kunststoffmaterial dosiert und dann in das Werkzeug der Spritzgießvorrichtung 20 gespritzt. Dies erfolgt über die Angussbuchsen 22, die in das Werkzeug 21, insbesondere in dessen Kavität, einmünden. Dort wo das Material die Angussbuchsen 22 verlässt und in das Werkzeug 21 eingespritzt wird, befinden sich die so genannten Anspritzpunkte 30.

Diese Anspritzpunkte 30 lassen sich nach Fertigstellung des Kunststoffbehälters 10 auf dessen Oberfläche erkennen.

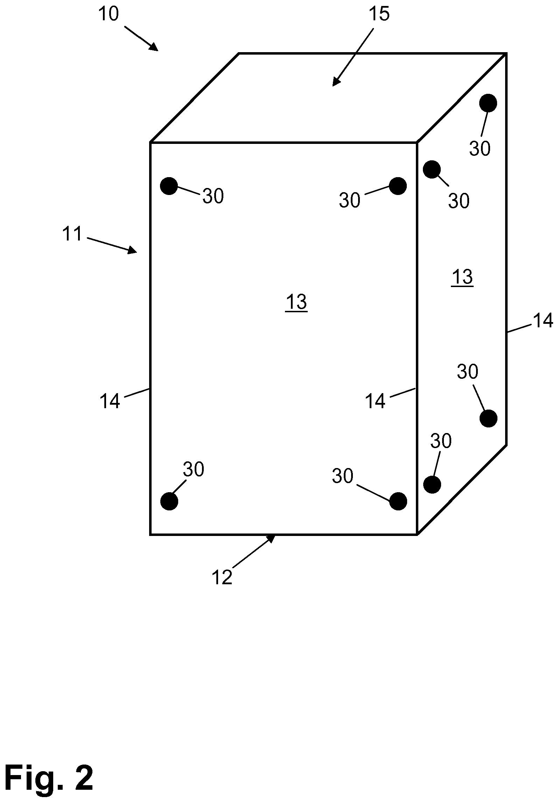

Da auf der Oberfläche des fertig gestellten Kunststoffbehälters 10 befindliche Anspritzpunke 30 nachteilig sind, wird es gemäß der vorliegenden Erfindung nunmehr möglich, die Anspritzpunkte 30 auf die Behälterkanten 14, oder aber in den Bereich der Behälterkanten 14, wie in Figur 2 dargestellt ist, zu verlegen. Der erfinderische Grundgedanke der vorliegenden Erfindung besteht nunmehr darin, dass nicht mehr mittig auf den Behälterseitenwandsegmenten 13 des Kunststoffbehälters 10 angespritzt wird, sondern vielmehr auf den Behälterkanten 14 des Kunststoffbehälters 10.

Zusätzlich kann eine Anspritzung auch noch über den Behälterboden 12 erfolgen. Dazu weist die Spritzgießvorrichtung 20 eine für den Behälterboden bestimmte Angussbuchse 23 auf, wobei ein entsprechender Anspritzpunkt 31 vorgesehen ist.

Nach Beendigung des eigentlichen Spritzvorgangs wird ein Kühlvorgang durchgeführt, das Werkzeug 21 anschließend geöffnet und der fertig gestellte Kunststoffbehälter 10 entformt.

In Figur 2 ist in stark schematisierter Ansicht eine zweite Alternative der vorliegenden Erfindung dargestellt, wobei ein Kunststoffbehälter 10, der ähnlich wie der Kunststoffbehälter in Figur 1 ausgebildet ist, hergestellt wird, so dass bezüglich der Ausgestaltung und Herstellung des Kunststoffbehälters zunächst auf die Ausführungen zu Figur 1 verwiesen wird. Im Unterschied zu Figur 1 befinden sich die Anspritzpunkte 30 nicht mehr auf den Behälterkanten 14, sondern auf den Behälterwandsegmenten 13, allerdings im Bereich der Behälterkanten 14, das heißt in unmittelbarer Nähe zu den Behälterkanten 14.

### Bezugszeichenliste

- 10: Kunststoffbehälter (Müllbehälter)
- 11: Behälterkorpus
- 12: Behälterboden
- 13: Behälterseitenwandsegment
- 14: Behälterkante
- 15: Einwurföffnung

- 20: Spritzgießvorrichtung
- 21: Werkzeug
- 22: Angussbuchse
- 23: Angussbuchse

- 30: Anspritzpunkt
- 31: Anspritzpunkt

## Patentansprüche

1. Verfahren zum Herstellen eines Kunststoffbehälters (10), insbesondere eines Müllbehälters, wobei der Kunststoffbehälter (10) einen Behälterboden (12) und eine Behälterseitenwand mit wenigstens zwei Behälterseitenwandsegmenten (13) aufweist, wobei die Behälterseitenwandsegmente aneinander angrenzen und im Bereich der Angrenzung jeweils eine Behälterkante (14) bilden, die sich stets zwischen zwei aneinander angrenzenden Behälterseitenwandsegmenten befindet, und wobei der Kunststoffbehälter (10) mittels eines Spritzgussverfahrens hergestellt wird, indem die einzelnen Bestandteile des Behälters angespritzt werden, **dadurch gekennzeichnet, dass** die Anspritzung auf wenigstens einer der Behälterkanten (14) des Kunststoffbehälters (10) über wenigstens einen Anspritzpunkt (30) erfolgt.

2. Verfahren nach Anspruch 1, **dadurch gekennzeichnet, dass** dieses zur Herstellung eines Kunststoffbehälters (10) ausgebildet ist, welcher einen Behälterboden (12) und eine Behälterseitenwand mit vier Behälterseitenwandsegmenten (13) aufweist, welche aneinander angrenzen und im Bereich der Angrenzungen insgesamt vier Behälterkanten (14) bilden, wobei die Anspritzung auf wenigstens zwei, vorzugsweise auf vier Behälterkanten (14) des Kunststoffbehälters (10) erfolgt.

3. Verfahren nach Anspruch 1 oder 2, **dadurch gekennzeichnet, dass** die Anspritzung auf wenigstens einer Behälterkante (14) des Kunststoffbehälters (10) über wenigstens zwei Anspritzpunkte (30) erfolgt.

4. Verfahren nach einem der Ansprüche 1 bis 3, **dadurch gekennzeichnet, dass** die Anspritzung auf wenigstens einer Innenseite der Behälterkante (14) des Kunststoffbehälters (10) und/oder auf wenigstens einer Außenseite der Behälterkante (14) des Kunststoffbehälters (10) erfolgt.

5. Verfahren zum Herstellen eines Kunststoffbehälters (10), insbesondere eines Müllbehälters, wobei der Kunststoffbehälter (10) einen Behälterboden (12) und eine Behälterseitenwand mit wenigstens zwei Behälterseitenwandsegmenten (13) aufweist, wobei die Behälterseitenwandsegmente aneinander angrenzen und im Bereich der Angrenzung jeweils eine gerundete Behälterkante (14) bilden, die sich stets zwischen zwei aneinander angrenzenden Behälterseitenwandsegmenten befindet, und wobei der Kunststoffbehälter (10) mittels eines Spritzgussverfahrens hergestellt wird, indem die einzelnen Bestandteile des Behälters angespritzt werden, insbesondere Verfahren zur Herstellung eines Kunststoffbehälters (10) gemäß einem der Ansprüche 1 bis 4, **dadurch gekennzeichnet, dass** die Anspritzung auf wenigstens einem Behälterseitenwandsegment (13) des Kunststoffbehälters (10) über wenigstens einen Anspritzpunkt (30) im Beginn des Radiusauslaufs des Eckradius wenigstens einer der gerundeten Behälterkanten (14) erfolgt.

6. Verfahren nach Anspruch 5, **dadurch gekennzeichnet, dass** dieses zur Herstellung eines Kunststoffbehälters (10) ausgebildet ist, welcher einen Behälterboden (12) und eine Behälterseitenwand mit vier Behälterseitenwandsegmenten (13) aufweist, welche aneinander angrenzen und im Bereich der Angrenzungen insgesamt vier Behälterkanten (14) bilden, wobei die Anspritzung auf wenigstens zwei, vorzugsweise auf vier Behälterseitenwandsegmenten (13) des Kunststoffbehälters (10) erfolgt.

7. Verfahren nach Anspruch 5 oder 6, **dadurch gekennzeichnet, dass** die Anspritzung auf wenigstens einem Behälterseitenwandsegment (13) des Kunststoffbehälters (10) über wenigstens zwei Anspritzpunkte (30) erfolgt.

8. Verfahren nach einem der Ansprüche 5 bis 7, **dadurch gekennzeichnet, dass** die Anspritzung auf wenigstens einer Innenseite des Behälterseitenwandsegments (13) des Kunststoffbehälters (10) und/oder auf wenigstens einer Außenseite des Behälterseitenwandsegments (13) des Kunststoffbehälters (10) erfolgt.

9. Verfahren nach einem der Ansprüche 1 bis 8, **dadurch gekennzeichnet, dass** die Anspritzung zusätzlich auf der Fläche des Behälterbodens (12), insbesondere mittig auf der Fläche des Behälterbodens (12), erfolgt.

10. Verfahren nach einem der Ansprüche 1 bis 9, **dadurch gekennzeichnet, dass** der Kunststoffbehälter (10) mittels eines Spritzgussverfahrens, insbesondere mittels eines sequentiellen Spritzgussverfahrens, hergestellt wird.

11. Verfahren nach Anspruch 10, soweit auf einen der Ansprüche 1 bis 4 rückbezogen, **dadurch gekennzeichnet, dass** der Kunststoffbehälter (10) in einer Spritzgießvorrichtung (20) hergestellt wird, welche ein Werkzeug (21) mit der Kontur des herzustellenden Kunststoffbehälters (10) mit wenigstens einer Angussbuchse (22, 23) zum Einspritzen von Kunststoffmaterial in das Werkzeug (21) aufweist, dass die wenigstens eine Angussbuchse (22) im Bereich wenigstens einer Behälterkante (14) des herzustellenden Kunststoffbehälters (10) in das Werkzeug (21) einmündet und dass die Anspritzung über die wenigstens eine Angussbuchse (2) an wenigstens einer Behälterkante (14) des Kunststoffbehälters erfolgt.

12. Verfahren nach Anspruch 10, soweit auf einen der Ansprüche 5 bis 8 rückbezogen, **dadurch gekennzeichnet, dass** der Kunststoffbehälter (10) in einer Spritzgießvorrichtung (20) hergestellt wird, welche ein Werkzeug (21) mit der Kontur des herzustellenden Kunststoffbehälters (10) mit wenigstens einer Angussbuchse (22, 23) zum Einspritzen von Kunststoffmaterial in das Werkzeug (21) aufweist, dass die wenigstens eine Angussbuchse (22) im Bereich wenigstens eines Behälterseitenwandsegments (13) im Bereich wenigstens einer Behälterkante (14) des herzustellenden Kunststoffbehälters (10) in das Werkzeug (21) einmündet und dass die Anspritzung über die wenigstens eine Angussbuchse (2) an wenigstens einem Behälterseitenwandsegment (13) des Kunststoffbehälters erfolgt.

13. Kunststoffbehälter (10), insbesondere Müllbehälter, aufweisend einen Behälterboden (12) und eine Behälterseitenwand mit wenigstens zwei Behälterseitenwandsegmenten (13), wobei die Behälterseitenwandsegmente (13) aneinander angrenzen und im Bereich der Angrenzung jeweils eine Behälterkante (14) bilden, die sich stets zwischen zwei aneinander angrenzenden Behälterseitenwandsegmenten befindet, **dadurch gekennzeichnet, dass** dieser an wenigstens einer Behälterkante (14) wenigstens einen Anspritzpunkt (30) aufweist oder dass die Behälterkante (14) als gerundete Behälterkante ausgebildet ist, und dass der Kunststoffbehälter (10) im Beginn des Radiusauslaufs des Eckradius der gerundeten Behälterkante wenigstens einen Anspritzpunkt (30) aufweist.

14. Kunststoffbehälter nach Anspruch 13, **dadurch gekennzeichnet, dass** dieser durch ein Verfahren gemäß den Ansprüchen 1 bis 12 herstellbar ist oder hergestellt ist.

15. Kunststoffbehälter nach Anspruch 13 oder 14, **dadurch gekennzeichnet, dass** dieser an der Fläche des Behälterbodens,(12) insbesondere mittig, wenigstens einen Anspritzpunkt (31) aufweist.

## Claims

1. A method of manufacturing a plastic container (10), in particular a waste container, said plastic container (10) comprising a container base (12) and a container side wall having at least two container side wall segments (13), said container side wall segments adjoining to one another and forming a container edge (14) in the area of abutment respectively, said container edge (14) being always provided between two container side wall segments adjoining to one another, and whereby the plastic container (10) is produced by means of an injection molding process, wherein the individual components of the container being injection molded, **characterized in that** the injection is effected on at least one of the container edges (14) of the plastic container (10) via at least one injection point (30).

2. The method according to claim 1, **characterized in that** the method is provided for manufacturing a plastic container (10) comprising a container base (12) and a container side wall having four container side wall segments adjoining to one another and forming in total four container edges (14) in the area of the abutments, wherein the injection is effected on at least two, preferably on four container edges (14) of the plastic container (10).

3. The method according to claim 1or 2, **characterized in that** the injection on at least one container edge (14) of the plastic container (10) is effected via at least two injection points (30).

4. The method according to anyone of claims 1 to 3, **characterized in that** the injection is effected on at least on inner side of the container edge (14) of the plastic container (10) and/or on at least one outer side of the container edge (14) of the plastic container (10).

5. A method of manufacturing a plastic container (10), in particular a waste container, said plastic container (10) comprising a container base (12) and a container side wall having at least two container side wall segments (13), said container side wall segments adjoining to one another and forming a curved container edge (14) in the area of abutment respectively, said curved container edge (14) being always provided between two container side wall segments adjoining to one another, and whereby the plastic container (10) is produced by means of an injection molding process, wherein the individual components of the container being injection molded, in particular a method for manufacturing a plastic container (10) according to anyone of claims 1 to 4, **characterized in that** the injection is effected on at least one container side wall segment (13) of the plastic container (10) via at least one injection point (30) at the begin of the line of tangency of the edge radius of at least one of the curved container edges (14).

6. The method according to claim 5, **characterized in that** the method is provided for manufacturing a plastic container (10) comprising a container base (12) and a container side wall having four container side wall segments adjoining to one another and forming in total four container edges (14) in the area of the abutments, wherein the injection is effected on at least two, preferably on four container side wall segments (13) of the plastic container (10).

7. The method according to claim 5 or 6, **characterized in that** the injection on at least one container side wall segment (13) of the plastic container (10) is effected via at least two injection points (30).

8. The method according to anyone of claims 5 to 7, **characterized in that** the injection is effected on at least on inner side of the container side wall segment (13) of the plastic container (10) and/or on at least one outer side of the container side wall segment (13) of the plastic container (10).

9. The method according to anyone of claims 1 to 8, **characterized in that** the injection is additionally effected on the face of the container base (12), in particular centrally on the face of the container base (12)

10. The method according to anyone of claims 1 to 9, **characterized in that** the plastic container (10) is produced by means of an injection molding process, in particular by means of a sequential injection molding process.

11. The method according to claim 10, as far as dependent on anyone of claims 1 to 4, **characterized in that** the plastic container (10) is manufactured in an injection molding apparatus (20), comprising a tool (21) with the contour of the plastic container (10) to be manufactured having at least one sprue bush (22, 23) for injecting plastic material into said tool (21), **in that** the at least one sprue bush (22) runs into said tool (21) in the area of at least one container edge (14) of the plastic container (10) to be manufactured, and **in that** the injection is effected on at least one container edge (14) of the plastic container via the at least one sprue bush (22).

12. The method according to claim 10, as far as dependent on anyone of claims 5 to 8, **characterized in that** the plastic container (10) is manufactured in an injection molding apparatus (20), comprising a tool (21) with the contour of the plastic container (10) to be manufactured having at least one sprue bush (22, 23) for injecting plastic material into said tool (21), **in that** the at least one sprue bush (22) runs into said tool (21) in the area of at least one container side wall segment (13) in the area of at least one container edge (14) of the plastic container (10) to be manufactured, and **in that** the injection is effected on at least one container side wall segment (13) of the plastic container via the at least one sprue bush (22).

13. A plastic container (10), in particular a waste container, comprising a container base (12) and a container side wall with at least two container side wall segments (13), said container side wall segments adjoining to one another and forming a container edge (14) in the area of abutment respectively, said container edge being always provided between two container side wall segments adjoining to one another, **characterized in that** the plastic container comprises at least on injection point (30) at at least one container edge (14), or that the container edge (14) is formed as a curved container edge (14), and that the plastic container (10) comprises at least on injection point (30) at the begin of the line of tangency of the edge radius of the curved container edge (14).

14. The plastic container according to claim 13, **characterized in that** the container can be manufactured or is manufactured by means of a method according to anyone of claims 1 to 12.

15. The plastic container according to claim 13 or 14, **characterized in that** the container comprises at least one injection point (31) at the face of the container base (12), in particular centrally.

## Revendications

1. Procédé servant à fabriquer un contenant en plastique (10), en particulier un contenant à déchets, dans lequel le contenant en plastique (10) présente un fond de contenant (12) et une paroi latérale de contenant pourvue au moins de deux segments de paroi latérale de contenant (13), dans lequel les segments de paroi latérale de contenant sont contigus les uns les autres et forment, dans la zone contiguë, respectivement une arête de contenant (14), qui se trouve systématiquement entre deux segments de paroi latérale de contenant contigus l'un à l'autre, et dans lequel le contenant en plastique (10) est fabriqué au moyen d'un procédé de moulage par injection, les divers constituants du contenant étant appliqués par injection, **caractérisé en ce que** l'application par injection est effectuée sur au moins une des arêtes de contenant (14) du contenant en plastique (10) par l'intermédiaire au moins d'un point d'application par injection (30).

2. Procédé selon la revendication 1, **caractérisé en ce que** ledit procédé est réalisé afin de fabriquer un contenant en plastique (10), qui présente un fond de contenant (12) et une paroi latérale de contenant pourvue de quatre segments de paroi latérale de contenant (13), qui sont contigus les uns aux autres et qui forment, dans les zones contiguës, au total quatre arêtes de contenant (14), dans lequel l'application par injection est effectuée sur au moins deux, de préférence sur quatre, arêtes de contenant (14) du contenant en plastique (10).

3. Procédé selon la revendication 1 ou 2, **caractérisé en ce que** l'application par injection est effectuée sur au moins une arête de contenant (14) du contenant en plastique (10) par l'intermédiaire au moins de deux points d'application par injection (30).

4. Procédé selon l'une quelconque des revendications 1 à 3, **caractérisé en ce que** l'application par injection est effectuée sur au moins un côté intérieur de l'arête de contenant (14) du contenant en plastique (10) et/ou sur au moins un côté extérieur de l'arête de contenant (14) du contenant en plastique (10).

5. Procédé servant à fabriquer un contenant en plastique (10), en particulier un contenant à déchets, dans lequel le contenant en plastique (10) présente un fond de contenant (12) et une paroi latérale de contenant pourvue au moins de deux segments de paroi latérale de contenant (13), dans lequel les segments de paroi latérale de contenant sont contigus les uns aux autres et forment, dans la zone contiguë, respectivement une arête de contenant (14) arrondie, qui se trouve systématiquement entre deux segments de paroi latérale de contenant contigus, et dans lequel le contenant en plastique (10) est fabriqué au moyen d'un procédé de moulage par injection, les divers éléments constitutifs du contenant étant appliqués par injection, en particulier procédé servant à fabriquer un contenant en plastique (10) selon l'une quelconque des revendications 1 à 4, **caractérisé en ce que** l'application par injection est effectuée sur au moins un segment de paroi latérale de contenant (13) du contenant en plastique (10) sur au moins un point d'application par injection (30) au début d'une ligne de tangente du rayon d'angle au moins d'une des arêtes de contenant (14) arrondies.

6. Procédé selon la revendication 5, **caractérisé en ce que** ledit procédé est réalisé afin de fabriquer un contenant en plastique (10), qui présente un fond de contenant (12) et une paroi latérale de contenant pourvue de quatre segments de paroi latérale de contenant (13), qui sont contigus les uns aux autres et qui forment, dans les zones contiguës, au total quatre arêtes de contenant (14), dans lequel l'application par injection est effectuée sur au moins deux, de préférence quatre, segments de paroi latérale de contenant (13) du contenant en plastique (10).

7. Procédé selon la revendication 5 ou 6, **caractérisé en ce que** l'application par injection est effectuée sur au moins un segment de paroi latérale de contenant (13) du contenant en plastique (10) sur au moins deux points d'application par injection (30).

8. Procédé selon l'une quelconque des revendications 5 à 7, **caractérisé en ce que** l'application par injection est effectuée sur au moins un côté intérieur du segment de paroi latéral de contenant (13) du contenant en plastique (10) et/ou sur au moins un côté extérieur du segment de paroi latérale de contenant (13) du contenant en plastique (10).

9. Procédé selon l'une quelconque des revendications 1 à 8, **caractérisé en ce que** l'application par injection est effectuée en supplément sur la surface du fond de contenant (12), en particulier au centre sur la surface du fond de contenant (12).

10. Procédé selon l'une quelconque des revendications 1 à 9, **caractérisé en ce que** le contenant en plastique (10) est fabriqué au moyen d'un procédé de moulage par injection, en particulier au moyen d'un procédé de moulage par injection séquentiel.

11. Procédé selon la revendication 10, renvoyant à l'une quelconque des revendications 1 à 4, **caractérisé en ce que** le contenant en plastique (10) est fabriqué dans un dispositif de moulage par injection (20), qui présente un outil (21) présentant le contour du contenant en plastique (10) à fabriquer pourvu au moins d'une cheminée de moule (22, 23) servant à injecter un matériau de plastique dans l'outil (21), **en ce que** l'au moins une cheminée de moule (22) débouche, dans la zone au moins d'une arête de contenant (14) du contenant en plastique (10) à fabriquer, dans l'outil (21), et **en ce que** l'application par injection est effectuée par l'intermédiaire de l'au moins une cheminée de moule (2) au niveau au moins d'une arête de contenant (14) du contenant en plastique.

12. Procédé selon la revendication 10, renvoyant à l'une quelconque des revendications 5 à 8, **caractérisé en ce que** le contenant en plastique (10) est fabriqué dans un dispositif de moulage par injection (20), qui présente un outil (21) présentant le contour du contenant en plastique (10) à fabriquer pourvu au moins d'une cheminée de moule (22, 23) servant à injecter du matériau plastique dans l'outil (21), **en ce que** l'au moins une cheminée de moule (22) débouche dans la zone au moins d'un segment de paroi latérale de contenant (13) dans la zone au moins d'une arête de contenant (14) du contenant en plastique (10) à fabriquer, dans l'outil (21), et **en ce que** l'application par injection est effectuée par l'intermédiaire de l'au moins une cheminée de moule (2), au niveau au moins d'un segment de paroi latérale de contenant (13) du contenant plastique.

13. Contenant plastique (10), en particulier contenant à déchets, présentant un fond de contenant (12) et une paroi latérale de contenant pourvue au moins de deux segments de paroi latérale de contenant (13), dans lequel les segments de paroi latérale de contenant (13) sont contigus et forment, dans la zone contiguë, respectivement une arête de contenant (14), qui se trouve systématiquement entre deux segments de paroi latérale de contenant contigus, **caractérisé en ce que** ledit contenant en plastique présente au niveau au moins d'une arête de contenant (14) au moins un point d'application par injection (30), ou **en ce que** l'arête de contenant (14) est réalisée sous la forme d'une arête de contenant arrondie, et **en ce que** le contenant en plastique (10) présente, au début de la ligne de tangente du rayon d'angle de l'arête de contenant arrondie, au moins un point d'application par injection (30).

14. Contenant en plastique selon la revendication 13, **caractérisé en ce que** ce dernier peut être fabriqué ou est fabriqué par un procédé selon les revendications 1 à 12.

15. Contenant en plastique selon la revendication 13 ou 14, **caractérisé en ce que** ce dernier présente, au niveau de la surface du fond de contenant (12), en particulier au centre, au moins un point d'application par injection (31).
